(19) **Europäisches Patentamt / European Patent Office / Office européen des brevets**

(11) **EP 3 650 774 A1**

(12) **EUROPEAN PATENT APPLICATION**
published in accordance with Art. 153(4) EPC

(43) Date of publication:
**13.05.2020 Bulletin 2020/20**

(21) Application number: **18829068.8**

(22) Date of filing: **31.05.2018**

(51) Int Cl.:
*F24F 11/56* (2018.01)　　　*G01S 5/22* (2006.01)
*F24F 120/12* (2018.01)

(86) International application number:
**PCT/JP2018/020976**

(87) International publication number:
**WO 2019/008960 (10.01.2019 Gazette 2019/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.07.2017 JP 2017130612**

(71) Applicant: **Mitsubishi Heavy Industries Thermal Systems, Ltd.**
**Tokyo 108-8215 (JP)**

(72) Inventors:
• **HIRAO Toyotaka**
**Tokyo 108-8215 (JP)**
• **MIZUNO Hisao**
**Tokyo 108-8215 (JP)**
• **SHIMIZU Kenji**
**Tokyo 108-8215 (JP)**
• **SAKURAI Takao**
**Tokyo 108-8215 (JP)**
• **MARUYAMA Masanori**
**Tokyo 108-8215 (JP)**
• **NISHIKAWA Naoki**
**Tokyo 108-8215 (JP)**

(74) Representative: **Studio Torta S.p.A.**
**Via Viotti, 9**
**10121 Torino (IT)**

(54) **AIR CONDITIONING CONTROL DEVICE, ENVIRONMENTAL SETTING TERMINAL, AIR CONDITIONING CONTROL METHOD, AND PROGRAM**

(57) An air conditioning control device (2) executes a step of individually detecting ultrasonic waves emitted from respective smartphones (4) through a plurality of microphones (32) disposed at different positions, a step of estimating terminal positions of the smartphones (4) on the basis of results of detection of the ultrasonic waves through the plurality of microphones (32), a step of acquiring requested environment settings indicating environments requested by users, and a step of controlling an air conditioning indoor unit (3) on the basis of the requested environment settings and the terminal positions.

FIG. 1

**Description**

[Technical Field]

The present invention relates to an air conditioning control device, an environment setting terminal, an air conditioning control method, and a program.
Priority is claimed on Japanese Patent Application No. 2017-130612, filed July 3, 2017, the content of which is incorporated herein by reference.

[Background Art]

In a space where a plurality of users are present, a function of identifying the positions of individuals on the basis of measurement of radio field intensities and time differences of arrival (TDOA) of terminal devices (remote controllers and the like) carried by the users and performing control such that the air conditioning requirements of the individuals are satisfied as far as possible may be provided (refer to Patent Literature 1, for example).

[Citation List]

[Patent Literature]

[Patent Literature 1]
Japanese Patent, Publication No. 4867836

[Summary of Invention]

[Technical Problem]

When communication between an air conditioning control device and a plurality of environment setting terminals (carried by respective users) is performed using ultrasonic waves, it is necessary to avoid interference between ultrasonic waves emitted from the environment setting terminals carried by the plurality of users.
An object of the present invention devised in view of the aforementioned circumstances is to provide an air conditioning control device, an environment setting terminal, an air conditioning control method, and a program which can avoid interference between ultrasonic waves emitted from a plurality of environment setting terminals when communication between an air conditioning control device and the plurality of environment setting terminals is performed using ultrasonic waves.

[Solution to Problem]

According to a first aspect of the present invention, an air conditioning control device controls an air conditioning indoor unit according to requested environment settings requested by a plurality of users carrying environment setting terminals and terminal positions of the environment setting terminals and includes: an ultrasonic wave detection processor which individually detects ultrasonic waves emitted from the respective environment setting terminals through a plurality of ultrasonic sensors disposed at different positions; a position estimator which estimates terminal positions of the environment setting terminals on the basis of results of detection of the ultrasonic waves through the plurality of ultrasonic sensors; a requested environment acquisition unit which acquires the requested environment settings; and an indoor unit controller which controls the air conditioning indoor unit on the basis of the requested environment settings and the terminal positions.
According to a second aspect of the present invention, the ultrasonic wave detection processor performs answer back when the ultrasonic wave detection processor has read information superposed on ultrasonic waves emitted from the environment setting terminals.
According to a third aspect of the present invention, the requested environment acquisition unit acquires the requested environment settings through the information superposed on the ultrasonic waves emitted from the environment setting terminals.
According to a fourth aspect of the present invention, an environment setting terminal includes: a speaker capable of transmitting ultrasonic waves; a requested environment setting receiver which receives a requested environment setting indicating an environment requested by a user for an air conditioning control device; and an ultrasonic wave transmission processor which transmits ultrasonic waves on which the requested environment setting has been superposed through the speaker.

According to a fifth aspect of the present invention, the environment setting terminal further includes a microphone capable of detecting ultrasonic waves, and the ultrasonic wave transmission processor waits for a predetermined time and then re-transmits the ultrasonic waves on which the requested environment setting has been superposed when an answer back has not been received through the microphone after the ultrasonic waves on which the requested environment setting has been superposed are transmitted.

According to a sixth aspect of the present invention, the ultrasonic wave transmission processor changes a frequency of the ultrasonic waves and then re-transmits the ultrasonic waves on which the requested environment setting has been superposed when an answer back has not been received through the microphone after the ultrasonic waves on which the requested environment setting has been superposed are transmitted.

According to a seventh aspect of the present invention, an air conditioning control method controls an air conditioning indoor unit according to requested environment settings requested by a plurality of users carrying environment setting terminals and terminal positions of the environment setting terminals and includes: a step of individually detecting ultrasonic waves emitted from the respective environment setting terminals through a plurality of ultrasonic sensors disposed at different positions; a step of estimating terminal positions of the environment setting terminals on the basis of results of detection of the ultrasonic waves through the plurality of ultrasonic sensors; a step of acquiring the requested environment settings; and a step of controlling the air conditioning indoor unit on the basis of the requested environment settings and the terminal positions.

According to an eighth aspect of the present invention, a program causes a computer of an air conditioning control device which controls an air conditioning indoor unit according to requested environment settings requested by a plurality of users carrying environment setting terminals and terminal positions of the environment setting terminals to execute: a step of individually detecting ultrasonic waves emitted from the respective environment setting terminals through a plurality of ultrasonic sensors disposed at different positions; a step of estimating terminal positions of the environment setting terminals on the basis of results of detection of the ultrasonic waves through the plurality of ultrasonic sensors; a step of acquiring the requested environment settings; and a step of controlling the air conditioning indoor unit on the basis of the requested environment settings and the terminal positions.

[Advantageous Effects of Invention]

According to the aforementioned air conditioning control device, environment setting terminal, air conditioning control method and program, it is possible to avoid interference between ultrasonic waves emitted from a plurality of environment setting terminals.

[Brief Description of Drawings]

Fig. 1 is a diagram showing the overall configuration of an air conditioning system according to a first embodiment.
Fig. 2 is a diagram showing functional configurations of an air conditioning control device and an air conditioning indoor unit according to the first embodiment.
Fig. 3 is a diagram showing a functional configuration of a smartphone according to the first embodiment.
Fig. 4 is a diagram showing a processing flow of the smartphone according to the first embodiment.
Fig. 5 is a diagram showing a data structure of transmitted information transmitted by the smartphone according to the first embodiment.
Fig. 6 is a diagram showing a processing flow of the air conditioning control device according to the first embodiment.
Fig. 7 is a diagram showing a data structure of information for each user acquired by an indoor unit controller according to the first embodiment.
Fig. 8 is a diagram for explaining functions of the indoor unit controller according to the first embodiment.
Fig. 9 is a diagram showing a processing flow of a smartphone according to a second embodiment.
Fig. 10 is a first diagram for explaining functions of an air conditioning system according to other modified examples.
Fig. 11 is a second diagram for explaining functions of an air conditioning system according to other modified examples.

[Description of Embodiments]

<First embodiment

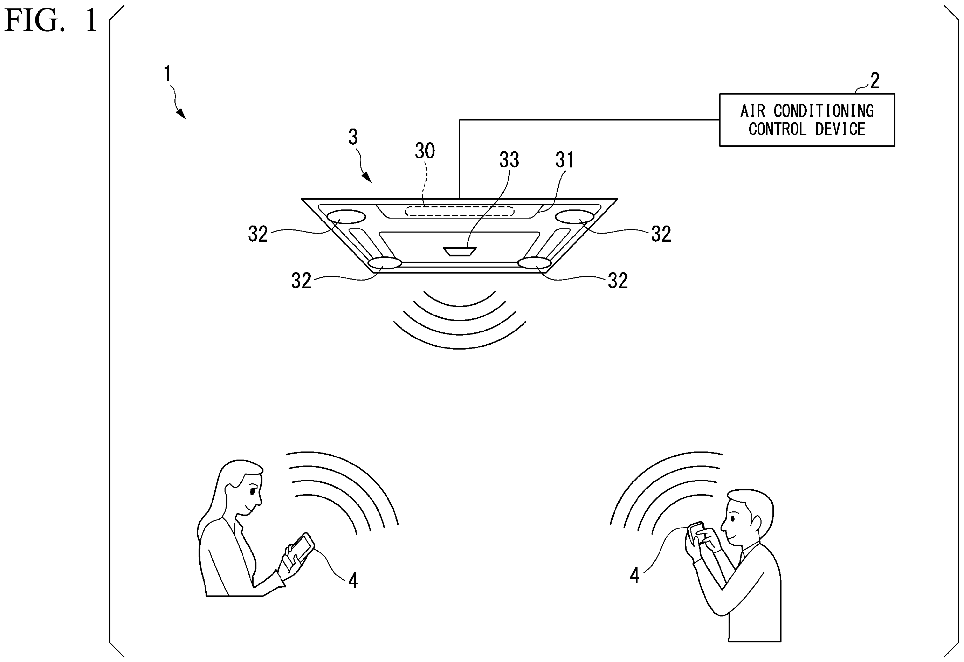

Hereinafter, an air conditioning system according to a first embodiment will be described with reference to Fig. 1 to Fig. 8.

(Overall configuration of air conditioning system)

Fig. 1 is a diagram showing the overall configuration of the air conditioning system according to the first embodiment.

It is assumed that the air conditioning system 1 according to the first embodiment is used in an environment in which a plurality of users are present in a relatively large space, such as a library, a large bookstore, a warehouse and a factory. However, the air conditioning system 1 is not limited to the aforementioned usage form in other embodiments.

The air conditioning system 1 includes an air conditioning control device 2, an air conditioning indoor unit 3, and a smartphone 4 carried by each of a plurality of users present in the same space.

The air conditioning control device 2 receives requests ("requested environment settings" which will be described later) for an environment (temperature, humidity, air flow, and the like) from a plurality of users and controls the air conditioning indoor unit 3 such that the requests are satisfied as far as possible.

The air conditioning indoor unit 3 is provided on the ceiling or the like of a space in which users are present and performs various operations for adjusting the environment in the space according to control commands from the air conditioning control device 2.

As shown in Fig. 1, the air conditioning indoor unit 3 includes a fan 30 which can adjust an air flow, a louver 31 which can adjust a wind direction, four microphones 32 which are ultrasonic sensors capable of detecting ultrasonic waves and disposed at different positions, and a speaker 33 which can emit ultrasonic waves.

Although the air conditioning system 1 according to the first embodiment includes only the single air conditioning indoor unit 3 (refer to Fig. 1), other embodiments are not limited to this form. That is, in the air conditioning system 1 according to other embodiments, a plurality of air conditioning indoor units 3 may be installed in the same space and the single air conditioning control device 2 may individually control operations of the plurality of air conditioning indoor units 3.

The smartphone 4 is a portable terminal device carried by each of a plurality of users. The smartphone 4 according to the present embodiment serves as an environment setting terminal (a remote controller of an air conditioner) for transmitting a request (requested environment setting) of each user to the air conditioning control device 2 by operating according to a dedicated program (application).

The "environment setting terminal" is not limited to a smartphone carried by each user in other embodiments. The "environment setting terminal" according to other embodiments may be a tablet type terminal device, a wrist watch type terminal device or the like carried by a user, or a dedicated remote controller.

(Functional configurations of air conditioning control device and air conditioning indoor unit)

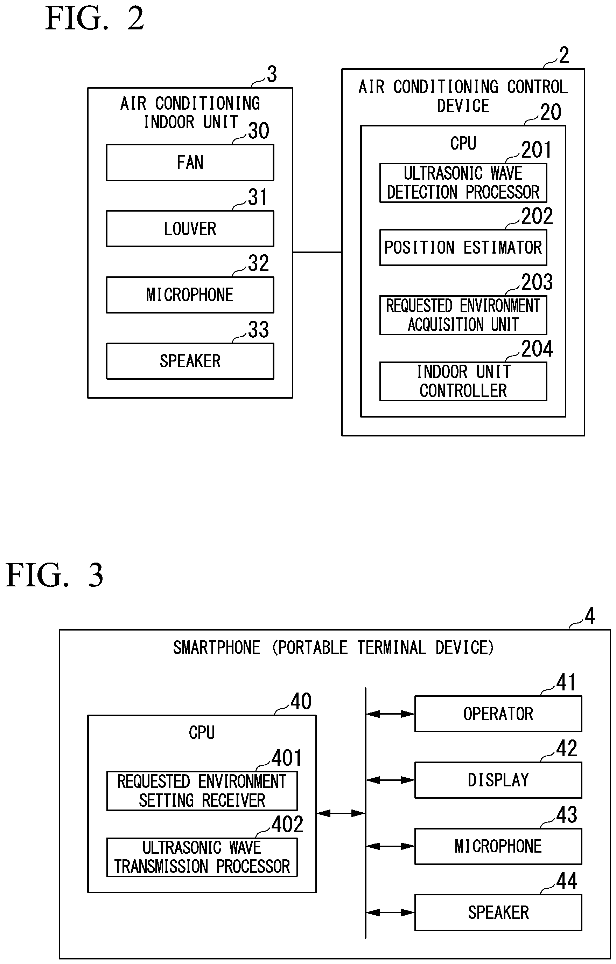

Fig. 2 is a diagram showing functional configurations of the air conditioning control device and the air conditioning indoor unit according to the first embodiment.

As shown in Fig. 2, the air conditioning control device 2 includes a CPU 20. The CPU 20 is a processor (microcomputer) which controls the entire air conditioning control device 2 and operates according to a program provided in advance.

The CPU 20 serves as an ultrasonic wave detection processor 201, a position estimator 202, a requested environment acquisition unit 203 and an indoor unit controller 204 by operating according to the program.

The ultrasonic wave detection processor 201 individually detects ultrasonic waves emitted from the respective smartphones 4 through the plurality of microphones 32 provided in the air conditioning indoor unit 3. Specifically, the ultrasonic wave detection processor 201 performs answer back (response) through the speaker 33 provided in the air conditioning indoor unit 3 when it has correctly read information superposed on ultrasonic waves emitted from the smartphones 4.

The position estimator 202 estimates the position of the smartphone 4 (terminal position) on the basis of results of detection of ultrasonic waves emitted from the smartphone 4 through the plurality of microphones 32 (specifically, a time difference of arrival at the microphones 32).

The requested environment acquisition unit 203 acquires a requested environment setting. Here, the "requested environment setting" is information indicating setting values of an environment (setting values such as a temperature, humidity and air flow that a user desire) requested by each user for the air conditioning control device 2 through the smartphone 4.

The indoor unit controller 204 controls the air conditioning indoor unit 3 (the fane 30 and the louver 31) on the basis of requested environment settings received from respective users and positions (terminal positions) of the respective users.

(Functional configuration of smartphone)

Fig. 3 is a diagram showing a functional diagram of the smartphone according to the first embodiment.

As shown in Fig. 3, the smartphone 4 includes a CPU 40, an operator 41, a display 42, a microphone 43 and a speaker 44.

For example, the operator 41 may be a touch panel and receive input operations of a user carrying the smartphone 4.

For example, the display 42 may be a liquid crystal display, an organic EL display, or the like and provide various types of information (a current set temperature, an input form of setting values, and the like) according to operation of the air conditioning control device 2 to the user through an image.

The microphone 43 is an ultrasonic wave detection sensor which detects ultrasonic waves emitted from the outside.

The speaker 44 transmits ultrasonic waves according to control of the CPU 40.

The microphone 43 and the speaker 44 may be a standard microphone and speaker mounted in conventional smartphones and may be ones used for a general call function.

The CPU 40 is a processor which controls the entire smartphone 4 and operates according to a program (an application for air conditioning control) provided in advance. Specifically, the CPU 40 serves as a requested environment setting receiver 401 and an ultrasonic wave transmission processor 402.

The requested environment setting receiver 401 receives a requested environment setting (a set temperature, set humidity, a setting value of air flow, and the like) from a user through the operator 41.

The ultrasonic wave transmission processor 402 transmits ultrasonic waves on which a requested environment setting received from a user has been superposed through the speaker 44.

In addition, when an answer back from the air conditioning control device 2 has not been received through the microphone 43 after an initial transmission of ultrasonic waves on which requested environment setting has been superposed, the ultrasonic wave transmission processor 402 waits for a predetermined time and then re-transmits ultrasonic waves on which the same requested environment setting as in the initial transmission has been superposed.

(Processing flow of smartphone)

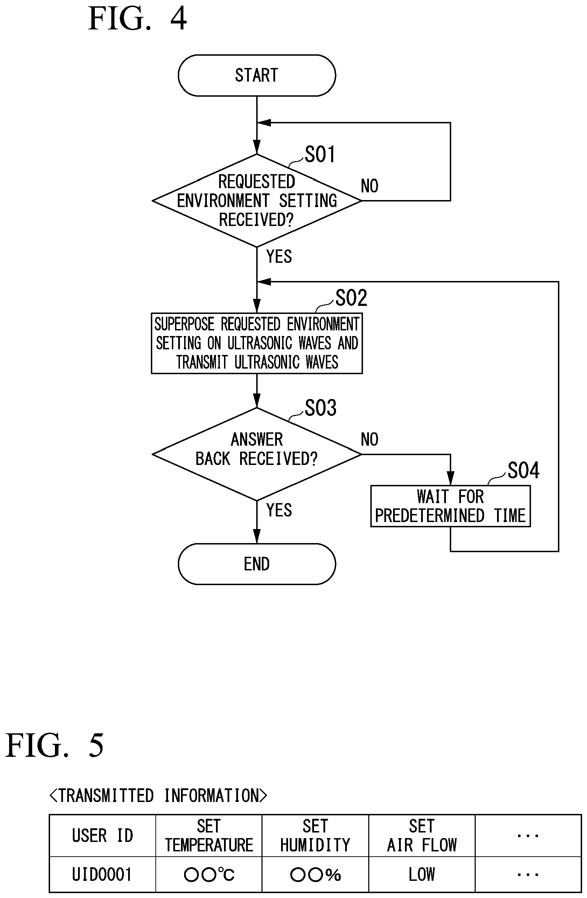

Fig. 4 is a diagram showing a processing flow of the smartphone according to the first embodiment.

In addition, Fig. 5 is a diagram showing a data structure of transmitted information transmitted by the smartphone according to the first embodiment.

The processing flow of the smartphone 4 according to the first embodiment may be repeatedly executed from a time at which a dedicated application is started, for example.

The requested environment setting receiver 401 of the smartphone 4 (CPU 40) waits for input of a requested environment setting from a user (NO in step S01). When an input of a requested environment setting from a user is received through operation of the operator 41 (touch panel) (YES in step S01), the requested environment setting receiver 401 acquires the input requested environment setting. This requested environment setting includes a set temperature, a set humidity, a set air flow, and the like input by the user carrying the smart phone 4.

Next, the requested environment setting receiver 401 attaches a user ID to the requested environment setting acquired in step S01, superposes the requested environment setting having the user ID attached thereto (hereinafter described as "transmitted information") on ultrasonic waves and transmits the ultrasonic waves through the speaker 44 (step S02).

Here, the "transmitted information" may have the data structure as shown in Fig. 5, for example. Specifically, the transmitted information is configured in such a manner that a set temperature ("○○ °C"), a set humidity ("○○%"), a set air flow ("low"), and the like input by a user are associated with a user ID ("UID0001"). For example, the user ID may be randomly determined when the aforementioned dedicated application is started or may be individual identification information allocated to the body of the smartphone 4 in advance.

The transmitted information is encoded through amplitude modulation (AM modulation) or the like and superposed on ultrasonic waves emitted from the speaker 44.

When transmission of the ultrasonic waves (on which the transmitted information has been superposed) in step S02 is completed, the ultrasonic wave transmission processor 402 determines whether an answer back has been received from the air conditioning control device 2 within a prescribed time (step S03). An answer back from the air conditioning control device 2 will be described later.

When an answer back has been received from the air conditioning control device 2 within the prescribed time (YES in step S03), it is determined that the transmitted information has been correctly recognized by the air conditioning control device 2 and the smartphone 4 ends the processing.

On the other hand, when an answer back has not been received from the air conditioning control device 2 within the prescribed time (NO in step S03), it is determined that the transmitted information transmitted in step S02 has not been correctly recognized by the air conditioning control device 2. Accordingly, the ultrasonic wave transmission processor 402 waits for a predetermined time (step S04) and then superposes transmitted information including the requested environment setting received in step S01 on ultrasonic waves and re-transmits the ultrasonic waves (step S02). The ultrasonic wave transmission processor 402 repeatedly executes processing of steps S02 to S04 until an answer back is received from the air conditioning control device 2.

The waiting time in step S04 may be, for example, on the order of several seconds to dozens of seconds and may be randomly determined on each occasion in the present embodiment.

(Processing flow of air conditioning control device)

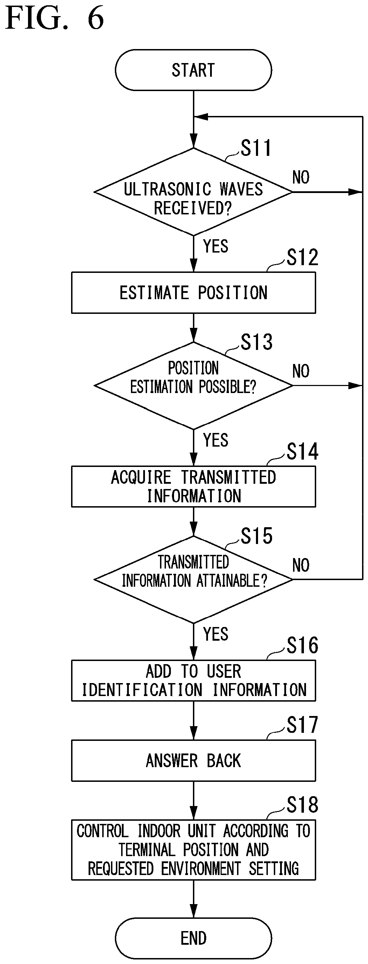

Fig. 6 is a diagram showing a processing flow of the air conditioning control device according to the first embodiment.

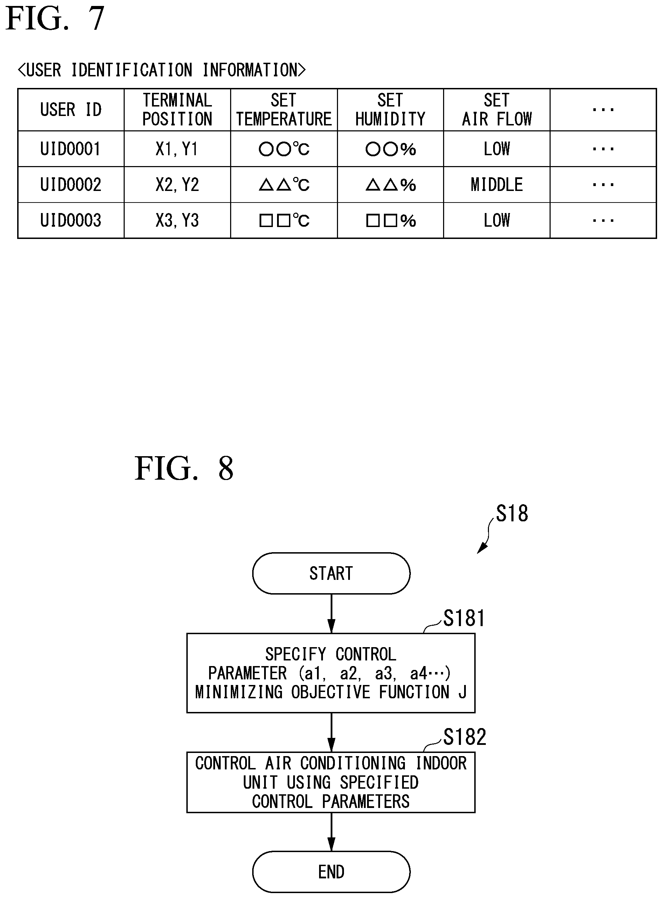

In addition, Fig. 7 is a diagram showing a data structure of user information acquired by the indoor unit controller according to the first embodiment.

Furthermore, Fig. 8 is a diagram for explaining functions of the indoor unit controller according to the first embodiment. The processing flow shown in Fig. 6 is regularly repeated from a time at which the air conditioning control device 2 and the air conditioning indoor unit 3 are started.

The ultrasonic wave detection processor 201 of the air conditioning control device 2 (CPU 20) waits for reception of ultrasonic waves transmitted from the smartphone 4 in step S02 of Fig. 4 (step S11: repeating of NO). Specifically, the ultrasonic wave detection processor 201 monitors the strengths of signals (strengths of signals output according to reception of ultrasonic waves) output from the microphones 32 (Fig. 2) provided in the air conditioning indoor unit 3 and determines that ultrasonic waves have been received when the signal strengths exceed a predetermined determination threshold value.

When ultrasonic waves have been received from the smartphone 4 (YES in step S11), the position estimator 202 of the air conditioning control device 2 estimates the position of the smartphone 4 which has transmitted the ultrasonic waves on the basis of a difference (time difference) between timings at which ultrasonic waves have been received from the respective microphones 32 (Fig. 2) (step S12). Specifically, the position estimator 202 acquires a time (detection time) at which a signal strength output from each microphone 32 exceeds the predetermined determination threshold value according to reception of ultrasonic waves. Then, the position estimator 202 estimates the position (terminal position) of the smartphone 4 on the basis of a different between four detection times (time difference of arrival). A technique (TDOA: Time difference of Arrival) of estimating the position of a transmission origin on the basis of a time difference of arrival of sound waves (radio waves) at respective sensors is known and thus detailed description thereof is omitted.

The position estimator 202 determines whether correct position estimation has been performed in step S 12 (step S13). Here, when ultrasonic waves have been transmitted from another smartphone 4 at the same time and thus interference has occurred, for example, the terminal position is not uniquely identified in step S12 and thus position estimation fails. When correct position estimation has not been performed (NO in step S13), the processing returns to step S11 without performing the following processing and waits for ultrasonic waves.

When correct position estimation has been performed (YES in step S13), the position estimator 202 records and holds the terminal position acquired on the basis of the position estimation.

Next, the requested environment acquisition unit 203 of the air conditioning control device 2 decodes transmitted information (user ID + requested environment setting (refer to Fig. 5)) encoded into ultrasonic waves through the microphones 32 to acquire the transmitted information (step S14).

The requested environment acquisition unit 203 determines whether the transmitted information has been correctly read according to decoding (step S15). Determination of whether correct reading has been performed may be performed through a generally well known cyclic redundancy check (CRC) and the like, for example. Here, when ultrasonic waves have been transmitted from other smartphones 4 and interference has occurred, for example, a plurality of encoded ultrasonic waves overlap and thus information superposed on the respective ultrasonic waves cannot be correctly read.

When the transmitted information has not been correctly read according to decoding (NO in step S15), the CPU 40 returns to step S11 without performing the following processing and waits for ultrasonic waves.

When the transmitted information has been correctly read (YES in step S15), the requested environment acquisition unit 203 records and holds the acquired transmitted information.

Here, the requested environment acquisition unit 203 integrates and associates terminal positions acquired by the position estimator 202 with the transmitted information (user ID + requested environment setting) acquired in step S15 and newly adds the associated information to user identification information as shown in Fig. 7 (step S16). Here, the user identification information includes terminal positions ("X1, Y1"), set temperatures ("○○ °C"), set humidities ("○○%"), set air flows ("low") and the like which are associated with for each different user IDs ("UID0001," "UID0002" and "UID0003"), as shown in Fig. 7.

When various types of information (terminal positions, user IDs and requested environment settings) acquired through steps S11 to S15 are normally added to the user identification information, the ultrasonic wave detection processor 201 performs answer back using ultrasonic waves through the speaker 33 of the air conditioning indoor unit 3 (refer to Fig. 1 and Fig. 2) (step S17). The smartphone 4 can ascertain that the air conditioning control device 2 has correctly recognized the terminal position and requested environment setting by receiving the answer back (refer to step S03 of Fig. 4).

Next, the indoor unit controller 204 of the air conditioning control device 2 controls the air conditioning indoor unit 3 on the basis of the user identification information including the new user terminal position and requested environment setting and optimizes air conditioning (step S18). Processing of step S18 will be described in detail with reference to Fig. 8.

As shown in Fig. 8, the indoor unit controller 204 specifies control parameters (al, a2, a3, a4, ...) for minimizing an objective function J (step S181). Here, the control parameters are direct command values for causing the air conditioning indoor unit 3 to be in a desired state and, for example, may be the rotational speed of the fan 30, the inclination angle of the louver 31, and the like.

The objective function J may be defined as represented by Expression (1).
[Math. 1]

$$
\left.
\begin{aligned}
x(i) &= \left(x(i)_1, x(i)_2, \dots, x(i)_M\right) = F(a1, a2, a3, a4, \dots) \\
x^*(i) &= \left(x^*(i)_1, x^*(i)_2, \dots, x^*(i)_M\right) \\
J &= \sum_{i=1}^{N} \left[ w_p(i) \sum_{k=1}^{M} w_d(i,k) \frac{|x(i)_k - x^*(i)_k|}{x^*(i)_k} \right]
\end{aligned}
\right\} \quad \cdots (1)
$$

A vector x(i) represented in expression (1) is a vector quantity indicating an actual temperature, humidity, air flow or the like at the position where a user i (i=1, 2, .., N) is present. The vector x(i) includes M elements ($x(i)_1$, $x(i)_2$, ..., $x(i)_M$) and each element ($x(i)_1$, $x(i)_2$, ..., $x(i)_M$) indicates a value (scalar quantity) such as an actual temperature, humidity or air flow at the position where the user i is present. In addition, as represented in expression (1), the vector x(i) is uniquely determined by a function F having the control parameters (al, a2, a3, a4, ...) of the air conditioning indoor unit 3 as input variables.

Furthermore, a vector x*(i) is a vector quantity indicating a temperature, humidity, air flow or the like that the user i desires. The vector x*(i) includes M elements ($x^*(i)_1$, $x^*(i)_2$, ..., $x^*(i)_M$) and each element ($x^*(i)_1$, $x^*(i)_2$, ..., $x^*(i)_M$) indicates a temperature, humidity, air flow or the like that the user i desires. More specifically, the respective elements ($x^*(i)_1$, $x^*(i)_2$, ..., $x^*(i)_M$) are a set temperature, set humidity, set air flow and the like indicated in the user identification information (Fig. 7).

As represented in expression (1), the objective function J is derived by obtaining an error rate (($x(i)_k$-$x^*(i)_k$)/$x^*(i)_k$) for each k-th element (k=1, .., M) of the vector x(i) first, summing error rates of all elements and then summing up the sums of the error rates obtained for respective user i for all users.

"M" is the number of elements constituting the vector x(i) and the vector x*(i) and is the total number of physical quantities to be set as targets by a user, such as a temperature, humidity, air flow and the like.

"N" is the number of users present in a space where the air conditioning indoor unit 3 is installed and, more specifically, the number of smartphones 4 (the number of types of user ID) detected through ultrasonic waves.

"Wd(i, k)" is a weighting factor separately defined for each element and set to "1" (equal value) for all elements in general operation. However, each user may set "Wd(i, k) for respective elements (temperature, humidity, air flow, ..) to reflect preferences representing which physical quantity is regarded as important, for example. Through this weighting factor Wd(i, k), it is possible to respond to detailed requirements such as "I wish a requirement for "air flow" to be fulfilled when I return from the hot outdoors" and "I wish to preferentially set "humidity" to a desired value during the rainy season" of the same person.

"Wp(i)" is a weighting factor separately defined for each user and set to "1" (equal value) for all users in general operation. However, in the cases in which an operation regarding demands of aged users or important users as important is performed, and the like, for example, the weighting factor for each user i may be changed.

In addition, a method of specifying a minimum value of the objective function J may be based on a well known search algorithm. The function F may be based on physical simulations of a temperature distribution, a humidity distribution and an air flow distribution in a space based on air flow and radiation, for example.

When the control parameters minimizing the objective function J are specified, the indoor unit controller 204 transmits the specified control parameters to the air conditioning indoor unit 3 as command values to control the air conditioning indoor unit 3 (step S182).

(Operation and effects)

According to the air conditioning control device 2 according to the first embodiment, the ultrasonic wave detection processor 201 individually detects ultrasonic waves emitted from the respective smartphones 4 (environment setting terminals) by performing answer back (step S17 of Fig. 6). In addition, the smartphone 4 waits for a predetermined time, superposes a requested environment setting (the transmitted signal in Fig. 5) on ultrasonic waves and re-transmits the ultrasonic waves when an answer back has not been acquired from the air conditioning control device 2.

Accordingly, the smartphone 4 attempts to transmit ultrasonic waves until an answer back is acquired when interference with ultrasonic waves emitted from other smartphones 4 occurs. Therefore, ultrasonic waves are individually received at all times and position estimation and reading of a requested environment setting are correctly performed.

As described above, it is possible to avoid interference between ultrasonic waves emitted from a plurality of environment setting terminals through the air conditioning control device 2 and the smartphone 4 according to the first embodiment.

In addition, according to the air conditioning control device 2 according to the first embodiment, the requested environment acquisition unit 203 acquires information (transmitted information) superposed on ultrasonic waves emitted from the smartphone 4.

Accordingly, ultrasonic waves transmitted for position estimation can also be used as an information transmission medium through encoding, and thus it is possible to avoid provision of new components and functions and promote reduction of product costs.

However, other embodiments are not limited to this aspect. For example, in the air conditioning system 1 according to other embodiments, a user ID and a requested environment setting may be transmitted to the air conditioning control device 2 through a transmission medium (radio waves, infrared rays, or the like) other than ultrasonic waves. In this case, it is assumed that ultrasonic waves transmitted by the smartphone 4 are simply sine waves and are used only for position estimation.

<Second embodiment>

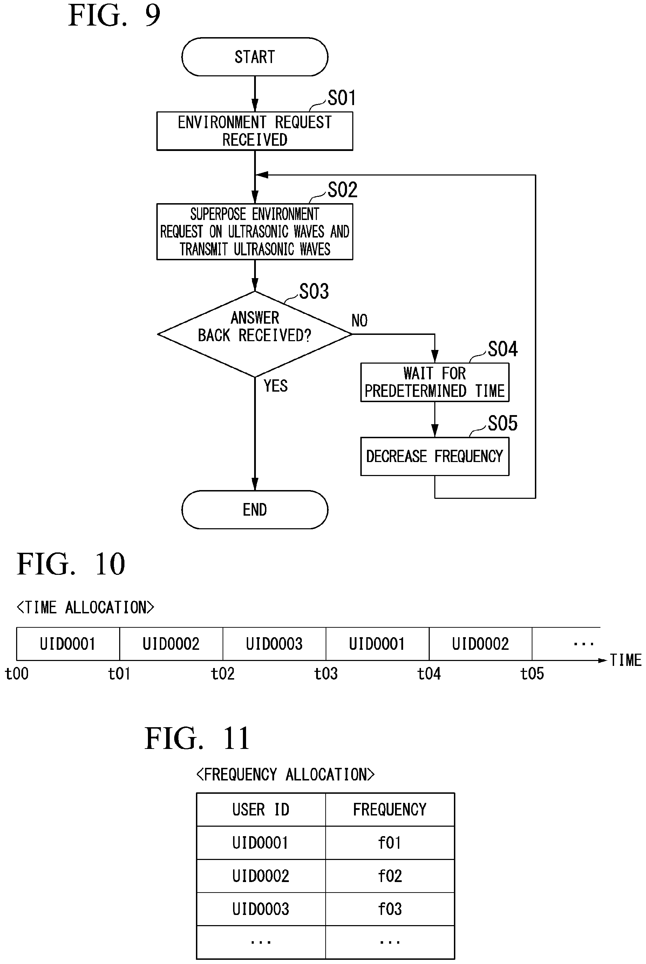

Next, an air conditioning system according to a second embodiment will be described with reference to Fig. 9.

(Processing flow of smartphone)

Fig. 9 is a diagram showing a processing flow of a smartphone according to the second embodiment.

The processing flow of the smartphone 4 according to the second embodiment may be repeatedly executed from a time at which a dedicated application is started, for example, as in the first embodiment.

Processing of steps S01, S02, S03 and S04 in Fig. 9 is the same as that of the first embodiment and thus description thereof is omitted.

According to the processing flow according to the second embodiment, when reception of an answer back from the air conditioning control device 2 has not been acquired (NO in step S03), the smartphone 4 (ultrasonic wave transmission processor 402) performs processing of decreasing the frequency of ultrasonic waves to be transmitted next (step S041). For example, if an initial value of the frequency of ultrasonic waves (frequency of ultrasonic waves emitted first) is "40 kHz," the smartphone 4 may set the frequency of ultrasonic eaves to be transmitted for the second time to "35 kHz" or the like. The degree of decreased frequency here may be randomly determined on each occasion.

Further, the air conditioning control device 2 according to the second embodiment includes a plurality of types of frequency filter (band pass filter) which can pass only a specific frequency band. Accordingly, even if ultrasonic wave interference with other smartphones 4 occurs again, ultrasonic waves can be individually detected by separating them through the frequency filters of the air conditioning control device 2.

In addition, it is desirable that the smartphone 4 set an initial value of the frequency of ultrasonic waves to be transmitted to a maximum value (e.g., 40 kHz) of a frequency that can be transmitted by the microphone 43, and when an answer back from the air conditioning control device 2 has not been acquired, gradually decrease the frequency by several kHz in step S041 on each occasion.

In this manner, it is possible to maintain an ultrasonic wave frequency varying range within a frequency band that does not affect the hearing of a user as far as possible.

However, other embodiments are not limited thereto and the smartphone 4 may perform processing of increasing the frequency of ultrasonic waves in step S041.

In other words, when the ultrasonic wave transmission processor 402 does not receive an answer back through the microphone 43 after transmitting ultrasonic waves having a requested environment setting superposed thereon, the ultrasonic wave transmission processor 402 changes (increases or decreases) the frequency of the ultrasonic waves and then re-transmits the ultrasonic waves having the requested environment setting superposed thereon.

<Modified example >

Although the air conditioning system 1 according to the first and second embodiments have been described in detail, detailed aspects of the air conditioning system 1 are not limited to the aforementioned one and various design changes may be added thereto within a range without departing from the spirit or scope of the present invention.

For example, although the smartphone 4 waits until a requested environment setting is received from the user in the processing flow of the smartphone 4 shown in Fig. 4, the present invention is not limited to this aspect. For example, the smartphone 4 may regularly transmit ultrasonic waves having a user ID superposed thereon even if a requested environment setting is not received from the user.

In this manner, an environment requested by a user can be provided more appropriately because a terminal position is updated to a newest user position at all times even when the position of the user has been changed.

Furthermore, in this case, the smartphone 4 may detect change of the position of the user (movement of the user) through an acceleration sensor or the like included therein and transmit ultrasonic waves having various types of information superposed thereon using the detected change as a trigger.

In addition, although the air conditioning control device 2 according to the first and second embodiments identifies the terminal position of the smartphone 4 on the basis of the technique (TDOA) of estimating the position of a transmission origin on the basis of a time difference of arrival of ultrasonic waves at respective ultrasonic sensors (microphones 32), other embodiments are not limited to this aspect.

For example, the air conditioning control device 2 according to other embodiments may identify the terminal position of the smartphone 4 on the basis of an ultrasonic wave reception strength.

Moreover, although a plurality of (four) microphones 32 which detect ultrasonic waves transmitted from the smartphone 4 are disposed at different positions of the housing of the air conditioning indoor unit 3 in the air conditioning system 1 according to the first and second embodiments, other embodiments are not limited to this aspect. That is, the microphones 32 may be disposed at any position in a space that is a cooling target of the air conditioning control device 2 (a ceiling, a wall, a floor and the like other than an installation place of an air conditioning indoor unit 3).

In addition, although the air conditioning indoor unit 3 according to the first and second embodiments includes four microphones 32, more microphones 32 may be included in other embodiments. Accordingly, redundancy of position estimation according to a time difference of arrival increases and thus a terminal position can be acquired with higher accuracy.

On the other hand, the number of installed microphones 32 may be three if accuracy can be maintained and may be two in the case of a precondition that a user is present on the predetermined plane.

Fig. 10 and Fig. 11 are a first diagram and a second diagram for explaining functions of air conditioning systems according to other modified examples.

An air conditioning control device 2 (ultrasonic wave detection processor 201) according to a first modified example may superpose transmission time allocation information on an answer back when performing the answer back (step S17 of Fig. 6).

For example, when ultrasonic waves from the smartphone 4 of "UID0001" are detected, the air conditioning control device 2 notifies the smartphone 4 of "UID0001" of allocation times of t00 to t01, t03 to t04, ... through the answer back thereof (refer to Fig. 10). Subsequently, when ultrasonic waves from the smartphone 4 of "UID0002" are newly detected, the air conditioning control device 2 notifies the smartphone 4 of "UID0002" of times t01 to t02, t04 to t05, ... other than the time periods allocated to "UID0001" through the answer back thereof.

On the other hand, each smartphone 4 which has received notification of allocation times transmits ultrasonic waves at the notified allocation times.

In this manner, interference can be prevented because a transmission timing does not overlap with those of other smartphones 4 after first communication.

Furthermore, the air conditioning control device 2 (ultrasonic wave detection processor 201) according to the second embodiment may superpose transmission frequency allocation information on an answer back when performing the answer back (S17 of Fig. 6).

For example, when ultrasonic waves from the smartphone 4 of "UID0001" are detected, the air conditioning control device 2 notifies the smartphone 4 of "UID0001" of allocation of a frequency f01 through the answer back thereof (refer to Fig. 11). Subsequently, when ultrasonic waves from the smartphone 4 of "UID0002" are newly detected, the air conditioning control device 2 notifies the smartphone 4 of "UID0002" of allocation time of a frequency f02 other than the frequency allocated to "UID0001" through the answer back thereof.

On the other hand, each smartphone 4 which has received notification of an allocated frequency transmits ultrasonic waves at the notified allocated frequency.

In this manner, interference can be prevented because a transmission frequency does not overlap with those of other smartphones 4 after first communication.

In addition, although the air conditioning control device 2 according to the first and second embodiments uses "temperature," "humidity," "air flow" and the like as elements used for control, other embodiments are not limited to this aspect. The air conditioning control device 2 according to other embodiments may use any quantity with respect to human comfortability, such as "illumination," "aroma," "bathwater temperature" and "washing strength of toilet seat," in addition to the aforementioned elements with respect to air conditioning. In the case of the above-described example, the air conditioning control device 2 according to other embodiments may have a lighting device, an aroma device, a hot water supply device, toilet seat device as well as the air conditioning indoor unit 3 as control targets.

Furthermore, the above-described various processing procedures of the air conditioning control device 2 and the smartphone 4 in the above-described embodiments, are stored in a computer-readable recording medium in the form of a program, and the aforementioned processing is performed by a computer reading and executing the program. In addition, the computer-readable recording medium refers to a magnetic disk, a magneto-optical disc, a CD-ROM, a DVD-ROM, a semiconductor memory or the like. Further, the computer program may be transmitted to a computer through a communication link and the computer which has received this transmission may execute the program.

The aforementioned program may be one for realizing some of the above-described functions. Further, the aforementioned program may be a program which can realize the above-described functions according to a combination with a program already recorded in a computer system, a so-called a difference file (difference program). Moreover, the air conditioning control device 2 and the smartphone 4 may be configured as a single computer or as a plurality of computers which can be connected such that they can communicate in other embodiments.

Although several embodiments of the present invention have been described, these embodiments have been suggested as examples and are not intended to limit the scope of the invention. These embodiments can be implemented in other various forms and various omissions, substitutions and modifications are possible without departing from essential characteristics of the invention. These embodiments and modifications thereof are included in the scope and essential characteristics of the invention and also included in the invention disclosed in claims and the equivalents thereof.

[Industrial Applicability]

According to the above-described air conditioning control device, environment setting terminal, air conditioning control method, and program, it is possible to avoid interference between ultrasonic waves emitted from a plurality of environment setting terminals.

[Reference Signs List]

1 Air conditioning system
2 Air conditioning control device
20 CPU
201 Ultrasonic wave detection processor
202 Position estimator
203 Requested environment acquisition unit
204 Indoor unit controller
3 Air conditioning indoor unit
30 Fan
31 Louver
32 Microphone (ultrasonic sensor)
33 Speaker
4 Smartphone (environment setting terminal)
40 CPU
41 Operator
42 Display
43 Microphone
44 Speaker
401 Requested environment setting receiver

402 Ultrasonic wave transmission processor

**Claims**

1.  An air conditioning control device which controls an air conditioning indoor unit according to requested environment settings requested by a plurality of users carrying environment setting terminals and terminal positions of the environment setting terminals, the air conditioning control device comprising:

    an ultrasonic wave detection processor which individually detects ultrasonic waves emitted from the respective environment setting terminals through a plurality of ultrasonic sensors disposed at different positions;
    a position estimator which estimates terminal positions of the environment setting terminals on the basis of results of detection of the ultrasonic waves through the plurality of ultrasonic sensors;
    a requested environment acquisition unit which acquires the requested environment settings; and
    an indoor unit controller which controls the air conditioning indoor unit on the basis of the requested environment settings and the terminal positions.

2.  The air conditioning control device according to claim 1, wherein the ultrasonic wave detection processor performs answer back when the ultrasonic wave detection processor has read information superposed on ultrasonic waves emitted from the environment setting terminals.

3.  The air conditioning control device according to claim 1 or 2, wherein the requested environment acquisition unit acquires the requested environment settings through the information superposed on the ultrasonic waves emitted from the environment setting terminals.

4.  An environment setting terminal comprising:

    a speaker capable of transmitting ultrasonic waves;
    a requested environment setting receiver which receives a requested environment setting indicating an environment requested by a user for an air conditioning control device; and
    an ultrasonic wave transmission processor which transmits ultrasonic waves on which the requested environment setting has been superposed through the speaker.

5.  The environment setting terminal according to claim 4, further comprising a microphone capable of detecting ultrasonic waves,
    wherein the ultrasonic wave transmission processor waits for a predetermined time and then re-transmits the ultrasonic waves on which the requested environment setting has been superposed when an answer back has not been received through the microphone after the ultrasonic waves on which the requested environment setting has been superposed are transmitted.

6.  The environment setting terminal according to claim 5, wherein the ultrasonic wave transmission processor changes a frequency of the ultrasonic waves and then re-transmits the ultrasonic waves on which the requested environment setting has been superposed when an answer back has not been received through the microphone after the ultrasonic waves on which the requested environment setting has been superposed are transmitted.

7.  An air conditioning control method for controlling an air conditioning indoor unit according to requested environment settings requested by a plurality of users carrying environment setting terminals and terminal positions of the environment setting terminals, the air conditioning control method comprising:

    a step of individually detecting ultrasonic waves emitted from the respective environment setting terminals through a plurality of ultrasonic sensors disposed at different positions;
    a step of estimating terminal positions of the environment setting terminals on the basis of results of detection of the ultrasonic waves through the plurality of ultrasonic sensors;
    a step of acquiring the requested environment settings; and
    a step of controlling the air conditioning indoor unit on the basis of the requested environment settings and the terminal positions.

8.  A program causing a computer of an air conditioning control device which controls an air conditioning indoor unit according to requested environment settings requested by a plurality of users carrying environment setting terminals and terminal positions of the environment setting terminals to execute:

a step of individually detecting ultrasonic waves emitted from the respective environment setting terminals through a plurality of ultrasonic sensors disposed at different positions;
a step of estimating terminal positions of the environment setting terminals on the basis of results of detection of the ultrasonic waves through the plurality of ultrasonic sensors;
a step of acquiring the requested environment settings; and
a step of controlling the air conditioning indoor unit on the basis of the requested environment settings and the terminal positions.

FIG. 1

EP 3 650 774 A1

# FIG. 2

```
┌─────────────────────────────┐          ┌──────────────────────────────────────┐
│              ⌇3             │          │    AIR CONDITIONING CONTROL        ⌇2 │
│   AIR CONDITIONING          │          │         DEVICE            ⌇20         │
│   INDOOR UNIT    ⌇30        │          │   ┌──────────────────────────────┐   │
│  ┌─────────────────────┐    │          │   │     CPU          ⌇201        │   │
│  │        FAN          │    │          │   │  ┌────────────────────────┐  │   │
│  └─────────────────────┘    │          │   │  │  ULTRASONIC WAVE       │  │   │
│                  ⌇31        │          │   │  │ DETECTION PROCESSOR    │  │   │
│  ┌─────────────────────┐    │          │   │  └────────────────────────┘  │   │
│  │       LOUVER        │    │          │   │                  ⌇202       │   │
│  └─────────────────────┘    │          │   │  ┌────────────────────────┐  │   │
│                  ⌇32        │          │   │  │  POSITION ESTIMATOR    │  │   │
│  ┌─────────────────────┐    │          │   │  └────────────────────────┘  │   │
│  │     MICROPHONE      │    │          │   │                  ⌇203       │   │
│  └─────────────────────┘    │          │   │  ┌────────────────────────┐  │   │
│                  ⌇33        │          │   │  │ REQUESTED ENVIRONMENT  │  │   │
│  ┌─────────────────────┐    │          │   │  │  ACQUISITION UNIT      │  │   │
│  │      SPEAKER        │    │          │   │  └────────────────────────┘  │   │
│  └─────────────────────┘    │          │   │                  ⌇204       │   │
│                             │          │   │  ┌────────────────────────┐  │   │
└─────────────────────────────┘          │   │  │   INDOOR UNIT          │  │   │
                                         │   │  │   CONTROLLER           │  │   │
                                         │   │  └────────────────────────┘  │   │
                                         │   └──────────────────────────────┘   │
                                         └──────────────────────────────────────┘
```

# FIG. 3

```
┌──────────────────────────────────────────────────────────────────────⌇4─┐
│          SMARTPHONE (PORTABLE TERMINAL DEVICE)                           │
│                                                              ⌇41         │
│  ┌──────────────────────┐ ⌇40        │    ┌──────────────────────────┐   │
│  │     CPU              │             │◄──►│       OPERATOR           │   │
│  │             ⌇401     │             │    └──────────────────────────┘   │
│  │  ┌────────────────┐  │             │                   ⌇42            │
│  │  │ REQUESTED ENV. │  │             │    ┌──────────────────────────┐   │
│  │  │ SETTING RECEIVER│ │             │◄──►│       DISPLAY            │   │
│  │  └────────────────┘  │             │    └──────────────────────────┘   │
│  │             ⌇402     │◄───────────►│                   ⌇43            │
│  │  ┌────────────────┐  │             │    ┌──────────────────────────┐   │
│  │  │ ULTRASONIC WAVE│  │             │◄──►│      MICROPHONE          │   │
│  │  │ TRANS. PROCESSOR│ │             │    └──────────────────────────┘   │
│  │  └────────────────┘  │             │                   ⌇44            │
│  └──────────────────────┘             │    ┌──────────────────────────┐   │
│                                       │◄──►│       SPEAKER            │   │
│                                       │    └──────────────────────────┘   │
└──────────────────────────────────────────────────────────────────────────┘
```

# FIG. 4

```
              ┌─────────────┐
              │    START    │
              └──────┬──────┘
                     │
                     ▼
                   ╱─S01─╲
                 ╱  REQUESTED  ╲      NO
                ◇ ENVIRONMENT SETTING ◇──────┐
                 ╲  RECEIVED?  ╱             │
                   ╲───────╱                │
                     │ YES                  │
                     ▼                      │
        ┌─────────────────────┐─S02         │
        │ SUPERPOSE REQUESTED ENVIRONMENT │  │
        │ SETTING ON ULTRASONIC WAVES AND │  │
        │  TRANSMIT ULTRASONIC WAVES      │  │
        └──────────┬──────────┘            │
                   │                       │
                   ▼  ─S03                  │
                 ╱───────╲     NO           │
                ◇  ANSWER  ◇────────┐       │
                 ╲ BACK RECEIVED? ╱ │       │
                   ╲───────╱        ▼       │
                     │ YES    ┌──────────┐─S04
                     │        │ WAIT FOR │  │
                     │        │PREDETERMINED TIME │
                     ▼        └──────────┘──┘
              ┌─────────────┐
              │     END     │
              └─────────────┘
```

# FIG. 5

<TRANSMITTED INFORMATION>

| USER ID | SET TEMPERATURE | SET HUMIDITY | SET AIR FLOW | ... |
|---------|-----------------|--------------|--------------|-----|
| UID0001 | ○○℃ | ○○% | LOW | ... |

# FIG. 6

```
                    ┌─────────────┐
                    │    START    │
                    └──────┬──────┘
                           │              ←──────────────┐
                           ▼  ⟋S11                       │
                        ╱───────╲                        │
                       ╱ ULTRASONIC╲    NO               │
                      ⟨   WAVES     ⟩ ──────────────────→│
                       ╲ RECEIVED? ╱                      │
                        ╲─────────╱                       │
                           │ YES                          │
                           ▼  ⟋S12                        │
                    ┌─────────────┐                       │
                    │ ESTIMATE    │                       │
                    │ POSITION    │                       │
                    └──────┬──────┘                       │
                           │  ⟋S13                        │
                           ▼                              │
                        ╱───────╲                        │
                       ╱ POSITION ╲    NO                 │
                      ⟨ ESTIMATION  ⟩ ───────────────────→│
                       ╲ POSSIBLE? ╱                       │
                        ╲─────────╱                        │
                           │ YES                           │
                           ▼  ⟋S14                         │
                    ┌─────────────┐                        │
                    │ ACQUIRE     │                        │
                    │ TRANSMITTED │                        │
                    │ INFORMATION │                        │
                    └──────┬──────┘                        │
                           │  ⟋S15                         │
                           ▼                               │
                        ╱───────╲                         │
                       ╱TRANSMITTED╲  NO                  │
                      ⟨ INFORMATION  ⟩ ───────────────────┘
                       ╲ATTAINABLE?╱
                        ╲─────────╱
                           │ YES
                           ▼  ⟋S16
                    ┌─────────────┐
                    │ ADD TO USER │
                    │IDENTIFICATION│
                    │ INFORMATION │
                    └──────┬──────┘
                           │  ⟋S17
                           ▼
                    ┌─────────────┐
                    │ ANSWER BACK │
                    └──────┬──────┘
                           │  ⟋S18
                           ▼
                    ┌─────────────┐
                    │CONTROL INDOOR│
                    │UNIT ACCORDING│
                    │TO TERMINAL   │
                    │POSITION AND  │
                    │REQUESTED     │
                    │ENVIRONMENT   │
                    │SETTING       │
                    └──────┬──────┘
                           ▼
                    ┌─────────────┐
                    │    END      │
                    └─────────────┘
```

# FIG. 7

<USER IDENTIFICATION INFORMATION>

| USER ID | TERMINAL POSITION | SET TEMPERATURE | SET HUMIDITY | SET AIR FLOW | ・・・ |
|---------|-------------------|-----------------|--------------|--------------|------|
| UID0001 | X1, Y1 | ○○℃ | ○○% | LOW | ・・・ |
| UID0002 | X2, Y2 | △△℃ | △△% | MIDDLE | ・・・ |
| UID0003 | X3, Y3 | □□℃ | □□% | LOW | ・・・ |

# FIG. 8

S18

START

S181

SPECIFY CONTROL PARAMETER (a1, a2, a3, a4・・・) MINIMIZING OBJECTIVE FUNCTION J

S182

CONTROL AIR CONDITIONING INDOOR UNIT USING SPECIFIED CONTROL PARAMETERS

END

# FIG. 9

```
          START
            │
            ▼                    S01
  ┌──────────────────────┐
  │ ENVIRONMENT REQUEST  │
  │      RECEIVED         │
  └──────────────────────┘
            │
            ▼                    S02
  ┌──────────────────────────────┐
  │ SUPERPOSE ENVIRONMENT        │
  │ REQUEST ON ULTRASONIC WAVES  │
  │ AND TRANSMIT ULTRASONIC WAVES│
  └──────────────────────────────┘
            │
            ▼        S03
          ◇ ANSWER          NO
          BACK RECEIVED? ──────────┐
            │                      ▼           S04
           YES          ┌──────────────────────┐
            │           │      WAIT FOR         │
            │           │ PREDETERMINED TIME    │
            │           └──────────────────────┘
            │                      │            S05
            │           ┌──────────────────────┐
            │           │  DECREASE FREQUENCY   │
            │           └──────────────────────┘
            ▼
          END
```

# FIG. 10

<TIME ALLOCATION>

| UID0001 | UID0002 | UID0003 | UID0001 | UID0002 | ⋯ |
|---------|---------|---------|---------|---------|---|

t00      t01      t02      t03      t04      t05      → TIME

# FIG. 11

<FREQUENCY ALLOCATION>

| USER ID | FREQUENCY |
|---------|-----------|
| UID0001 | f01 |
| UID0002 | f02 |
| UID0003 | f03 |
| ⋯ | ⋯ |

**INTERNATIONAL SEARCH REPORT**

International application No.

PCT/JP2018/020976

A. CLASSIFICATION OF SUBJECT MATTER
Int.Cl. F24F11/56(2018.01)i, G01S5/22(2006.01)i, F24F120/12(2018.01)n

According to International Patent Classification (IPC) or to both national classification and IPC

B. FIELDS SEARCHED

Minimum documentation searched (classification system followed by classification symbols)
Int.Cl. F24F11/00-11/89, G01S5/18-5/30

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-107871 A (DAIKIN INDUSTRIES, LTD.) 26 April 2007, paragraphs [0106]-[0134], [0209], fig. 1-10 | 1-5, 7, 8<br>6 |
| Y<br>A | JP 2010-32320 A (SHIMIZU CORP.) 12 February 2010, paragraphs [0010]-[0030], fig. 1-6 | 1-5, 7, 8<br>6 |
| A | JP 2015-143589 A (DENSO WAVE INC.) 06 August 2015, entire text, all drawings | 1-8 |
| A | JP 2010-276232 A (PANASONIC CORP.) 09 December 2010, entire text, all drawings | 1-8 |
| A | JP 2005-241208 A (MATSUSHITA ELECTRIC INDUSTRIAL CO., LTD.) 08 September 2005, entire text, all drawings | 1-8 |

☐ Further documents are listed in the continuation of Box C.   ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 03 July 2018 (03.07.2018) | 17 July 2018 (17.07.2018) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

| INTERNATIONAL SEARCH REPORT<br>Information on patent family members | | International application No.<br>PCT/JP2018/020976 |
|---|---|---|
| JP 2007-107871 A | 26 April 2007 | Family: none |
| JP 2010-32320 A | 12 February 2010 | Family: none |
| JP 2015-143589 A | 06 August 2015 | US 2015/0219353 A1 |
| JP 2010-276232 A | 09 December 2010 | CN 101900397 A |
| JP 2005-241208 A | 08 September 2005 | Family: none |

Form PCT/ISA/210 (patent family annex) (January 2015)

**EP 3 650 774 A1**

**Patent documents cited in the description**

- JP 2017130612 A
- JP 4867836 B